# EUROPEAN PATENT APPLICATION

(11) **EP 4 683 057 A1**
(43) Date of publication of application: **21.01.2026**
(21) Application number: 25178220.7
(22) Date of filing: 22.05.2025
(51) Int. Cl.: H01M 50/147, H01M 50/172, H01M 50/183, H01M 50/184, H01M 50/186, H01M 50/188

(54) **SECONDARY BATTERY, BATTERY ASSEMBLY AND ELECTRONIC DEVICE**

(30) Priority: 18.07.2024 CN 202421709628 U
(71) Applicant: AESC Japan Ltd., Yokohama-Shi, Kanagawa 220-0012 (JP)
(72) Inventor: SHAN, Xueyan, Wuxi City, 214443 (CN)
(74) Representative: Becker, Eberhard

(57) **Abstract**

Disclosed are a secondary battery (100), a battery assembly (10), and an electronic device (1). The secondary battery includes a housing (110), an electrode assembly (120), a terminal (140), an insulation sealing member (150), and a lower plastic component (160). The housing includes an end wall (111), and the end wall is provided with a terminal hole (1111). The terminal includes a columnar part (142), an outer flange (143), and an inner flange (141). The columnar part (142) passes through the terminal hole. The outer flange is located outside the housing, and extends from the columnar part toward the outer periphery of the end wall. The inner flange is located inside the housing, and extends from the columnar part toward the outer periphery of the end wall. The external insulation part of the insulation sealing member is located between the outer flange and the end wall.

## Description

### BACKGROUND

### Technical Field

The present disclosure relates to the field of batteries, specifically relating to a secondary battery, a battery assembly and an electronic device.

### Description of Related Art

Nowadays, columnar batteries are widely used in various industries because of their mature production technology, high yield rate, low processing cost, good safety performance and heat dissipation performance.

In the existing columnar battery, insulation between the end wall and the electrode assembly, as well as between the end wall and the terminal, is achieved through an insulating member. This insulating member is typically designed as an integrated unit. Additionally, a lower plastic component that surrounds the insulating member is positioned between the end wall and the electrode assembly. There is a gap between the lower plastic component and the insulating member. The presence of this gap creates a risk of short circuit between the end wall and the current collector structure.

### SUMMARY

Given the deficiencies of the related art, the present disclosure provides a secondary battery to overcome the technical problem of short circuit risk existing between the end wall and the current collector structure.

To achieve the above purpose and other related purposes, the present disclosure provides a secondary battery, which includes a housing, an electrode assembly, a terminal, an insulation sealing member and a lower plastic component. The housing includes an end wall and a side wall surrounding the end wall. The end wall is provided with a terminal hole. The electrode assembly is disposed within the housing. The terminal is fixed on the end wall and electrically connected with the electrode assembly. The terminal includes a columnar part, an outer flange and an inner flange. The columnar part passes through the terminal hole. The outer flange is located outside the housing, and extends from the columnar part toward the outer periphery of the end wall. The inner flange is located inside the housing, and extends from the columnar part toward the outer periphery of the end wall. The insulation sealing member includes an integrally formed external insulation part, a hole insulation part and an internal insulation part. The external insulation part is located between the outer flange and the end wall. The hole insulation part is located between the columnar part and the terminal hole. The internal insulation part is located between the inner flange and the end wall. The lower plastic component is located on one side of the end wall facing the electrode assembly. The lower plastic component surrounds the columnar part. Along the thickness direction of the end wall, the projections of the internal insulation part and the lower plastic component on the end wall at least partially overlap each other. The lower plastic component isolates the electrode assembly from the end wall.

In the above technical solution, the insulation sealing member is formed integrally, and completely surrounds the terminal hole, which improves the reliability of insulation between the terminal and the end wall. Along the thickness direction of the end wall, the projections of the internal insulation part and the lower plastic component on the end wall at least partially overlap each other, meaning that the lower plastic component and the internal insulation part at least partially overlap each other, ensuring that there is no gap between the lower plastic component and the internal insulation part, which may overcome the technical problem of short circuit risk existing between the end wall and the current collector structure.

In an example of the secondary battery of the present disclosure, along the thickness direction of the end wall, the internal insulation part and the lower plastic component overlap each other to form an overlap part. The internal insulation part and/or the lower plastic component include a thinning structure for reducing the thickness of the overlap part.

In the above technical solution, the setting of the thinning structure may reduce the thickness of the overlap part, which on one hand improves the flatness of the overlap part, and on the other hand reduces the space occupied in the height direction of the secondary battery by the overlap part.

In an example of the secondary battery of the present disclosure, the thinning structure includes a first step disposed at the outer periphery of one side of the internal insulation part facing the end wall. The first step is recessed toward the direction facing away from the end wall. The thinning structure also includes a second step disposed at the inner periphery of one side of the lower plastic component facing the electrode assembly. The second step is recessed toward the direction facing the end wall.

In the above technical solution, by setting the first step on one side of the internal insulation part facing the end wall to form a thinning area, a side of the internal insulation part close to the electrode assembly is made into a plane, which ensures the flatness of the pressing surface of the inner flange, and improves the pressing stability of the inner flange. By setting the second step at the inner periphery of the lower plastic component, on one hand, it is possible to improve the flatness of the overlap part, and on the other hand, it is possible to achieve the reduction of space occupied in the height direction of the secondary battery by the overlap part. Additionally, the second step of the lower plastic component may be disposed opposite to the first step of the internal insulation part. The first step and the second step may serve as positioning limits for each other, which may improve the centering of the internal insulation part and the lower plastic component during assembly. On the other hand, it is possible for one side of the lower plastic component close to the end wall to have better flatness, further reducing the space occupied in the height direction of the secondary battery by the lower plastic component. Furthermore, the lower plastic component is pressed onto the end wall by the internal insulation part, which may achieve the fixation of the lower plastic component, preventing gaps from being generated due to movement, thus further improving the insulation effect of the lower plastic component.

In an example of the secondary battery of the present disclosure, the first step and the second step overlap each other. Along the radius direction of the end wall, there is a gap between the inner edge of the first step and the outer edge of the second step.

In the above technical solution, the gap is used for the positioning gap between the internal insulation part and the lower plastic component in the assembly process. During assembly, the positioning fixture cooperates with this positioning gap, serving as a positioning function, which improves the centering of the internal insulation part and the lower plastic component, and enhances assembly efficiency and assembly quality. Additionally, this setting may mitigate the radius stress transfer to the lower plastic component when the insulation sealing member is folded, thus enhancing the issue of lower plastic component warping, and improving assembly quality.

In an example of the secondary battery of the present disclosure, along the radius direction of the end wall, the distance of the gap between the inner edge of the first step and the outer edge of the second step is a, wherein 0.2mm≤a≤2mm.

In the above technical solution, the range of a is set to be 0.2mm to 2mm. The lower limit of a is the minimum gap for metallurgical tool adaptation, which may satisfy the processing requirements of the positioning fixture. The upper limit of a is defined as 2mm, which may prevent the lower plastic component from decreasing in strength due to an excessively long cantilever, thus avoiding the issue of drooping at the outer periphery of the lower plastic component.

In an example of the secondary battery of the present disclosure, one end of the inner flange holding the internal insulation part includes a fastener structure extending toward the end wall, and one side of the internal insulation part facing the inner flange is provided with an accommodating groove that cooperates with the fastener structure.

In the above technical solution, this configuration may reduce the transmission of the riveting force of the terminal in the radius direction, and increase the riveting strength, thereby reducing the risk of ejection of the terminal.

In an example of the secondary battery of the present disclosure, a sealing ring is also disposed between the outer flange and the end wall. The sealing ring surrounds the external insulation part.

In the above technical solution, the insulation sealing member is mainly used for insulation, with relatively low sealing performance and poor long-term sealing reliability. Due to the large compression amount of the added sealing ring, the sealing effect is improved.

In an example of the secondary battery of the present disclosure, an upper plastic component is also disposed between the outer flange and the end wall. The upper plastic component surrounds the sealing ring. A first avoiding structure is disposed on one side of the upper plastic component close to the sealing ring, and a second avoiding structure is disposed on one side of the external insulation part close to the sealing ring.

In the above technical solution, the first avoiding structure and the second avoiding structure are configured to accommodate the compressed and deformed sealing ring, which may further improve the sealing performance.

The present disclosure also provides a battery assembly, which includes the secondary battery described in any of the above embodiments.

The present disclosure also provides an electronic device, which includes the battery assembly mentioned above.

In the secondary battery of the present disclosure, the insulation sealing member is formed integrally, and completely surrounds the terminal hole, which improves the reliability of insulation between the terminal and the end wall. Along the thickness direction of the end wall, the projections of the internal insulation part and the lower plastic component on the end wall at least partially overlap each other, meaning that the lower plastic component and the internal insulation part at least partially overlap each other, ensuring that there is no gap between the lower plastic component and the internal insulation part, which may overcome the technical problem of short circuit risk existing between the end wall and the current collector structure.

### BRIEF DESCRIPTION OF THE DRAWINGS

In order to explain the technical solutions in the embodiments of the present disclosure or the related art more clearly, a brief introduction will be given below to the drawings required in the description of the embodiments or the related art. Clearly, the drawings described below are only some embodiments of the present disclosure. For those skilled in the art, other embodiments may be obtained based on these drawings without creative labor.
FIG. 1 is a schematic structural diagram in an example of the secondary battery of the present disclosure.
FIG. 2 is a schematic structural diagram of an electrode assembly in an example of the secondary battery of the present disclosure.
FIG. 3 is a partial enlarged view of area A in an example of the secondary battery of the present disclosure in FIG. 1.
FIG. 4 is a partial enlarged view of area B in FIG. 3.
FIG. 5 is a partial enlarged view of area A in another example of the secondary battery of the present disclosure in FIG. 1.
FIG. 6 is a partial enlarged view of area C in FIG. 5.
FIG. 7 is a schematic diagram of an example of the battery assembly of the present disclosure.
FIG. 8 is a schematic diagram of an example of an electronic device of the present disclosure.

### DESCRIPTION OF THE EMBODIMENTS

The implementation mode of the present disclosure is explained below through specific examples, and those skilled in the art may easily understand other advantages and effects of the present disclosure from the content disclosed in this specification. The present disclosure may also be implemented or applied through other different specific embodiments, and various details in this specification may also be modified or changed based on different perspectives and applications without departing from the spirit of the present disclosure. It should be noted that, in the absence of conflict, the features in the following examples and embodiments may be combined with each other. It should also be understood that the terms used in the embodiments of the present disclosure are for describing specific embodiments and not for limiting the scope to be protected by the present disclosure. For test methods where specific conditions are not specified in the following examples, they are generally performed under conventional conditions or according to conditions recommended by manufacturers.

When a numerical range is provided in embodiments, it should be understood that, unless otherwise specified in the present disclosure, each of the two endpoints of the numerical range as well as any value between these two endpoints may be adopted. Unless otherwise defined, all technical and scientific terms used in the present disclosure are consistent with the understanding of those skilled in the art in the field and the disclosure of the present disclosure. The present disclosure may also be implemented using any methods, devices, and materials in the related art that are similar or equivalent to the methods, devices, and materials in the embodiments of the present disclosure.

It should be noted that terms such as "upper", "lower", "left", "right", "middle" and "one" used in this specification are merely for clarity of description and not for limiting the scope in which the present disclosure may be implemented. Changes or adjustments in their relative relationships, without substantially changing the technical content, may also be considered within the scope in which the present disclosure may be implemented.

The secondary battery includes an electrode assembly, which is a component in the secondary battery where electrochemical reactions occur, and may include one or more electrode assemblies.

The secondary battery also includes a housing, a cover plate and a terminal. The housing includes an end wall and a side wall surrounding the end wall. One end of the side wall has an opening. The electrode assembly may be assembled into the housing through the opening of the housing. The cover plate is configured to cover the opening of the housing to achieve sealing. The terminal passes through the end wall and is electrically connected to the electrode assembly to lead out the electrical energy generated by the electrode assembly.

In order to reduce the short circuit risk, it is necessary to insulate and isolate the terminal from the end wall, as well as to isolate the electrode assembly from the end wall. The insulation between the terminal and the end wall is normally achieved by sandwiching an insulation sealing member between the terminal and the end wall, while the insulation between the electrode assembly and the end wall is normally achieved by setting a lower plastic component between the electrode assembly and the end wall.

In the related technology, the lower plastic component surrounds the insulation sealing member, and there is a gap between the lower plastic component and the insulation sealing member. The existence of this gap may lead to a risk of short circuit between the end wall and the current collector structure, especially when a weight reduction hole is disposed in the positive electrode, the electrode tab may be exposed through the weight reduction hole, and may curl upward during output of gas to contact the end wall, causing a short circuit.

Given this, the present disclosure provides a technical solution where, along the thickness direction of the end wall, the projections of the internal insulation part and the lower plastic component on the end wall at least partially overlap each other, that is, the lower plastic component and the internal insulation part at least partially overlap each other, so that there is no gap between the lower plastic component and the internal insulation part, which may mitigate the technical problem of short circuit risk existing between the end wall and the current collector structure.

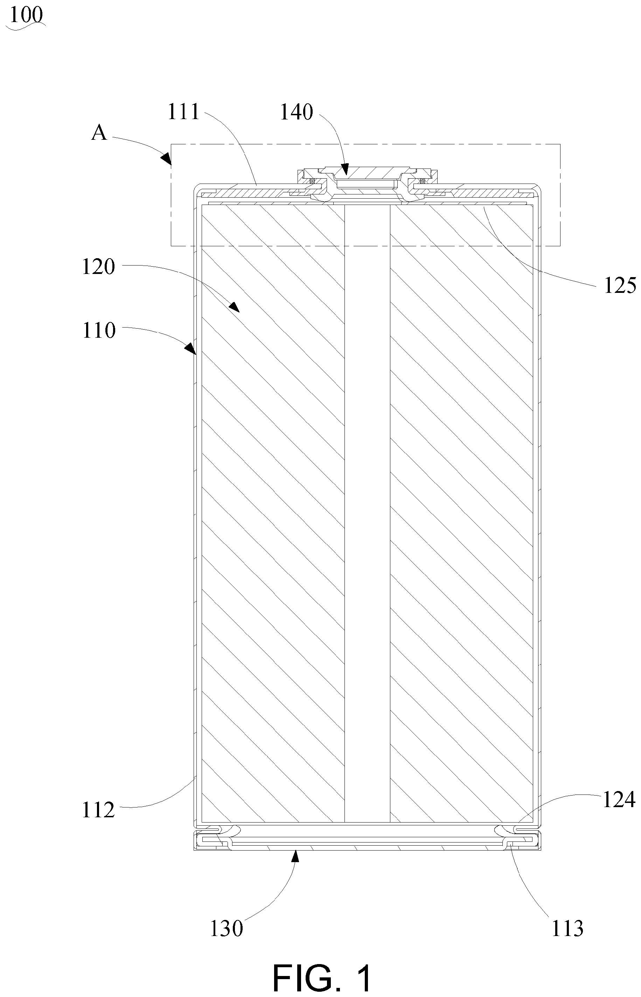

Please refer to FIG. 1 to FIG. 8, the present disclosure provides a secondary battery 100. The secondary battery 100 includes a housing 110, an electrode assembly 120, a terminal 140, an insulation sealing member 150 and a lower plastic component 160.

Please refer to FIG.1, the housing 110 includes an end wall 111 and a side wall 112 surrounding the end wall 111. As long as a stable sealing and electrical connection relationship can be established, the connection between the end wall 111 and the side wall 112 may be achieved through various methods, such as integral stamping, integral casting, or separate welding forms. The surrounding configuration of the side wall 112 is not limited, which may be in a cylindrical or prismatic form, or may surround along any other closed-loop contour that can match the end wall 111. In this embodiment, the outer edge of the end wall 111 is circular, the side wall 112 surrounds the outer edge of the end wall 111 in a cylindrical shape, and forms a circular opening 113 at one end of the side wall 112 facing away from the end wall 111. An accommodating cavity is formed in the housing 110 formed by the end wall 111 and the side wall 112 for accommodating the electrode assembly 120, electrolyte, and other necessary battery components. Specifically, the diameter of the housing 110 may be determined according to the specific dimensions of the electrode assembly 120, such as 18mm, 21mm, 46mm, etc. The material of the housing 110 may be various, such as copper, iron, aluminum, steel, aluminum alloy, etc. In order to prevent the housing 110 from rusting after long-term use, a layer of anti-rust material such as metallic nickel may be plated on the surface of the housing 110.

Please refer to FIG. 1 to FIG. 2, the electrode assembly 120 is disposed within the housing 110. The electrode assembly 120 is the component where electrochemical reactions occur in the secondary battery 100. The housing 110 may contain one or more electrode assemblies 120. The electrode assembly 120 includes electrode sheets and a separator 122. The electrode sheets and the separator 122 are wound to form a wound structure. Specifically, in this embodiment, the electrode assembly 120 includes a positive electrode sheet 121, a separator 122, and a negative electrode sheet 123 wound around the axial direction of the housing 110.

Please refer to FIG. 1 to FIG. 2, the positive electrode sheet 121 includes a positive current collector 1211 and a positive active substance layer coated on the positive current collector 1211. On the positive current collector 1211, there is a first coated area 1212 coated with the positive active substance layer and a first uncoated area 1213 without the positive active substance layer. The first coated area 1212 and the first uncoated area 1213 are arranged along the axial direction of the housing 110. The first uncoated area 1213 extends beyond the separator 122 towards one end in the height direction of the secondary battery 100, and bends toward the axis of the housing 110 to form a stacked positive electrode tab 125.

Please refer to FIG. 1 to FIG. 2, the negative electrode sheet 123 includes a negative current collector 1231 and a negative active substance layer coated on the negative current collector 1231. On the negative current collector 1231, there is a second coated area 1232 coated with the negative active substance layer and a second uncoated area 1233 without the negative active substance layer. The second coated area 1232 and the second uncoated area 1233 are arranged along the axial direction of the housing 110. The second uncoated area 1233 extends beyond the separator 122 towards the other end in the height direction of the secondary battery 100, and bends toward the axis of the housing 110 to form a stacked negative electrode tab 124.

Please refer to FIG. 1 to FIG. 2, the separator 122 is disposed between the positive electrode sheet 121 and the negative electrode sheet 123 to isolate the positive active substance layer and the negative active substance layer. Taking the lithium-ion secondary battery 100 as an example, the material of the positive current collector 1211 may be aluminium. The positive active substance layer includes positive active substance. The positive active substance may be lithium cobalt oxide, lithium iron phosphate, ternary lithium, or lithium manganese oxide, etc. The material of the negative current collector 1231 may be copper. The negative active substance layer includes negative active substance. The negative active substance may be carbon or silicon, etc. The base material of the separator 122 may be polypropylene (abbreviated as PP) or polyethylene (abbreviated as PE), etc. To provide protection and insulation for the cell, an insulation film may also be coated on the outside of the cell. The insulation film may be synthesized from PP, PE, polyethylene terephthalate (abbreviated as PET), polyvinyl chloride (abbreviated as PVC), or other high molecular polymer materials.

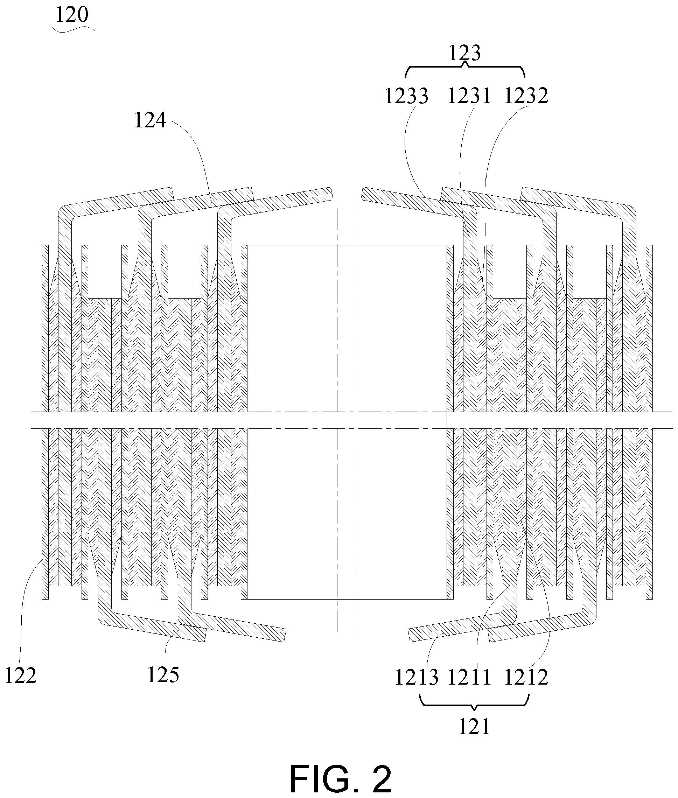

Please refer to FIG. 1 and FIG. 2, furthermore, in this present disclosure, the positive electrode tab 125 faces the end wall 111 or faces the opening 113, and the negative electrode tab 124 faces the other end of the housing 110. In this embodiment, the positive electrode tab 125 faces the end wall 111 and is electrically connected with the terminal 140, making the terminal 140 positively charged. The negative electrode tab 124 faces the opening 113 and is electrically connected with the housing 110, thereby being negatively charged. However, in other embodiments, the negative electrode tab 124 may also be connected with the terminal 140, and the positive electrode tab 125 may be connected with the housing 110.

Please refer to FIG. 1, the cover plate 130 is sealed and mounted on the opening 113. The shape of the outer edge of the cover plate 130 corresponds to the shape of the opening 113, and is connected with the side wall 112 to seal the opening 113. The configuration method of the cover plate 130 includes but is not limited to mechanical sealing or welding sealing. In this embodiment, the cover plate 130 adopts a mechanical sealing method to seal and block the opening 113.

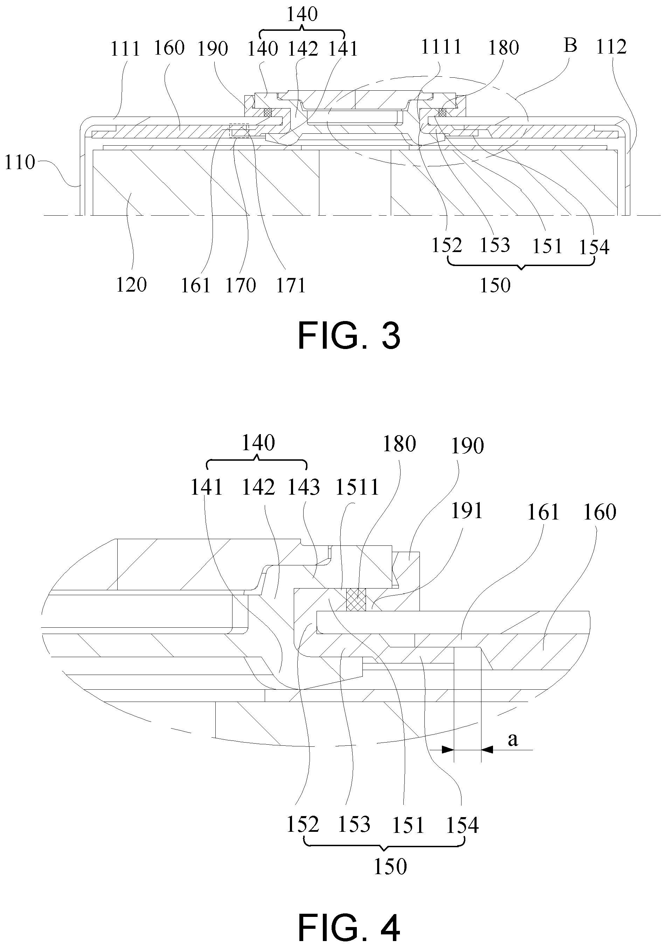

Please refer to FIG. 3 to FIG. 6, the terminal 140 is fixed on the end wall 111 and electrically connected with the electrode assembly 120. Specifically, the end wall 111 is provided with a terminal hole 1111. The terminal 140 passes through the terminal hole 1111 and insulated from the end wall 111. One end of the terminal 140 facing the electrode assembly 120 passes through the end wall 111 and is directly electrically connected with the positive electrode tab 125 or indirectly connected through an adapter. The structure of the terminal 140 may be any suitable form that allows the terminal 140 to pass through the end wall 111 and electrically connect with the positive electrode tab 125 of the electrode assembly 120. For example, the cross-section may be circular, square, prismatic, or an irregular contour that can achieve stable conduction. The terminal hole 1111 corresponds to the shape of the terminal 140. In this embodiment, the cross-section of the terminal 140 is circular.

Please refer to FIG. 3 to FIG. 6, the terminal 140 includes a columnar part 142, an outer flange 143 and an inner flange 141. The columnar part 142 passes through the terminal hole 1111. The cross-section of the columnar part 142 may be circular, square, prismatic or other irregular contours that can achieve stable conduction. In consideration of better sealing and matching effects, preferably, the columnar part 142 is adapted to the terminal hole 1111, that is, the terminal hole 1111 corresponds to the shape of the columnar part 142. In this embodiment, the cross-section of the columnar part 142 is circular. The circular design facilitates processing, assembly and sealing.

Please refer to FIG. 3 to FIG. 6, the outer flange 143 is located outside the housing 110, and extends from the columnar part 142 toward the outer periphery of the end wall 111. The external cross-section of the outer flange 143 may be circular, square, prismatic or other irregular contours that can achieve stable conduction, which is not limited herein. The inner flange 141 is located inside the housing 110, and extends from the columnar part 142 toward the outer periphery of the end wall 111. Specifically, the inner flange 141 is connected to one end of the columnar part 142 located inside the housing 110, and extends along a side of the end wall 111 facing the inside of the housing 110 toward the outer edge of the end wall 111. The external cross-section of the inner flange 141 may be circular, square, prismatic or other irregular contours that can achieve stable conduction, which is not limited herein.

Please refer to FIG. 3 to FIG. 6, the insulation sealing member 150 includes an integrally formed external insulation part 151, a hole insulation part 152 and an internal insulation part 153. The material of the insulation sealing member 150 may be any one of perfluoroalkoxy (abbreviated as PFA), polybutylene terephthalate (abbreviated as PBT), liquid crystal polymer (abbreviated as LCP), PP, polyphenylene sulfide (abbreviated as PPS) and polycarbonate (abbreviated as PC), which is not limited herein. The external insulation part 151 is located between the outer flange 143 and the end wall 111. The hole insulation part 152 is located between the columnar part 142 and the terminal hole 1111. The internal insulation part 153 is located between the inner flange 141 and the end wall 111. The insulation sealing member 150 is formed integrally and completely surrounds the terminal hole 1111, which improves the reliability of insulation between the terminal 140 and the end wall 111.

Please refer to FIG. 3 to FIG. 6, the lower plastic component 160 is located on one side of the end wall 111 facing the electrode assembly 120, and the lower plastic component 160 surrounds the columnar part 142. The material of the lower plastic component 160 may be any one of PP, PPS, PC, PFA, PBT and LCP, which is not limited herein. Furthermore, along the thickness direction of the end wall 111, the projections of the internal insulation part 153 and the lower plastic component 160 on the end wall 111 at least partially overlap each other. The lower plastic component 160 isolates the electrode assembly 120 from the end wall 111, that is, the lower plastic component 160 and the internal insulation part 153 at least partially overlap each other. The overlapping method is not limited herein. For example, along the thickness direction of the end wall 111, the outer ring of the internal insulation part 153 may be located between the end wall 111 and the lower plastic component 160, or the inner ring of the lower plastic component 160 may be located between the end wall 111 and the internal insulation part 153, or the outer ring of the internal insulation part 153 and the inner ring of the lower plastic component 160 may be connected by insertion. All of the above settings may ensure that there is no gap between the lower plastic component 160 and the internal insulation part 153, which may mitigate the technical problem of short circuit risk between the end wall 111 and the current collector structure.

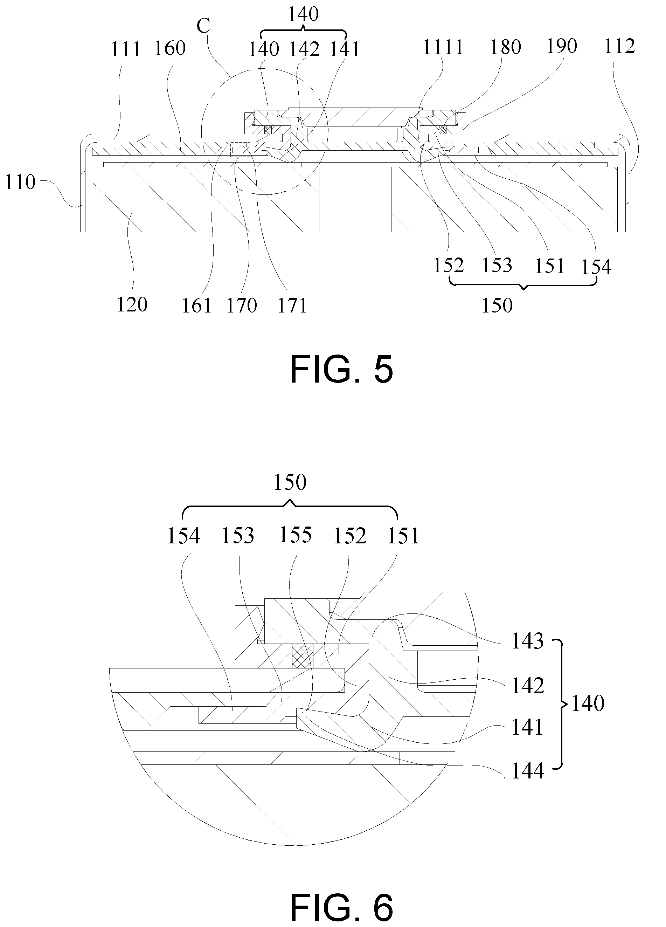

Please refer to FIG. 3 and FIG. 5, in an example of the secondary battery 100 of the present disclosure, along the thickness direction of the end wall 111, the internal insulation part 153 and the lower plastic component 160 overlap each other to form an overlap part 170, and the internal insulation part 153 and/or the lower plastic component 160 include a thinning structure 171 for reducing the thickness of the overlap part 170. The setting of the thinning structure 171 may reduce the thickness of the overlap part 170, which on one hand improves the flatness of the overlap part 170, and on the other hand reduces the space occupied in the height direction of the secondary battery 100 by the overlap part 170.

Please refer to FIG. 3 and FIG. 5, in an example of the secondary battery 100 in the present disclosure, the thinning structure 171 includes a first step 154 disposed at the outer periphery on one side of the internal insulation part 153 facing the end wall 111. The first step 154 is recessed toward the direction facing away from the end wall 111. By setting the first step 154 to form a thinning area, a side of the internal insulation part 153 close to the electrode assembly 120 is a plane, which ensures the flatness of the pressing surface of the inner flange 141 and improves the pressing stability of the inner flange 141. The thinning structure 171 also includes a second step 161 disposed at the inner periphery on one side of the lower plastic component 160 facing the electrode assembly 120. The second step 161 is recessed toward the direction facing the end wall 111. By setting the second step 161 to form a thinning area, on one hand, it is possible to improve the flatness of the overlap part 170, and on the other hand, it is possible to achieve the reduction of space occupied in the height direction of the secondary battery 100 by the overlap part 170. Additionally, the second step 161 of the lower plastic component 160 may be disposed opposite to the first step 154 of the internal insulation part 153. The first step 154 and the second step 161 may serve as limiting positions for each other, which may improve the centering of the internal insulation part 153 and the lower plastic component 160 during assembly. On the other hand, it is possible to make one side of the lower plastic component 160 close to the end wall 111 to have better flatness, further reducing the space occupied in the height direction of the secondary battery 100 by the lower plastic component 160. Furthermore, in this embodiment, the outer ring of the lower plastic component 160 is located between the internal insulation part 153 and the end wall 111. The lower plastic component 160 is pressed onto the end wall 111 by the internal insulation part 153, so it is possible to achieve the fixation of the lower plastic component 160 and prevent gaps from being generated due to movement, further improving the insulation effect of the lower plastic component 160.

Please refer to FIG. 3 to FIG. 5, in an example of the secondary battery 100 in the present disclosure, the first step 154 and the second step 161 overlap each other. Along the radius direction of the end wall 111, there is a gap between the inner edge of the first step 154 and the outer edge of the second step 161. The above-mentioned gap is used for the positioning gap of the internal insulation part 153 and the lower plastic component 160 in the assembly process. During assembly, the positioning fixture cooperates with this positioning gap to serve as a positioning function, which improves the centering of the internal insulation part 153 and the lower plastic component 160, enhances assembly efficiency and assembly quality. Additionally, this setting may mitigate the radius stress transfer to the lower plastic component 160 when the insulation sealing member 150 is folded, thus improving the issue of the lower plastic component 160 warping, and enhancing assembly quality.

Please refer to FIG. 3 to FIG. 4, in an example of the secondary battery 100 in the present disclosure, along the radius direction of the end wall 111, the distance of the gap between the inner edge of the first step 154 and the outer edge of the second step 161 is a, wherein 0.2mm≤a≤2mm. The value of a may be 0.2mm, 0.5mm, 0.8mm, 1mm, 1.2mm, 1.5mm, 1.8mm, 2mm, etc. The range of a is set to be 0.2mm to 2mm because the lower limit of a is the minimum gap suitable for the metallurgical fixture, which may satisfy the processing requirements of the positioning fixture; while the upper limit of a is defined as 2mm, which may prevent the strength reduction of the lower plastic component 160 due to excessive cantilever length, thus avoiding the issue of drooping at the outer periphery of the lower plastic component 160.

Please refer to FIG. 5 to FIG. 6, in another example of the secondary battery 100 in the present disclosure, one end of the inner flange 141 holding the internal insulation part 153 includes a fastener structure 144 extending toward the end wall 111, and one side of the internal insulation part 153 facing the inner flange 141 is provided with an accommodating groove 155 that cooperates with the fastener structure 144. This setting may mitigate the transmission of the riveting force of the terminal 140 in the radius direction, and increase the riveting strength, thus reducing the risk of ejection of the terminal 140.

Please refer to FIG. 3 to FIG. 5, in an example of the secondary battery 100 in the present disclosure, a sealing ring 180 is also disposed between the outer flange 143 and the end wall 111, with the sealing ring 180 surrounding the external insulation part 151. The material of the sealing ring 180 may be EPDM rubber, fluoro-silicone rubber or fluorine rubber, and so on, but is not limited herein. The insulation sealing member 150 is mainly used for insulation, with relatively low sealing performance and poor long-term sealing reliability. Due to the large compression amount of the sealing ring 180, it is possible to improve the sealing effect.

Please refer to FIG. 3 to FIG. 4, in an example of the secondary battery 100 in the present disclosure, an upper plastic component 190 is also disposed between the outer flange 143 and the end wall 111. The material of the upper plastic component 190 may be PP, PPS, PC, PFA, PBT and LCP, and so on, which is not limited herein. The upper plastic component 190 surrounds the sealing ring 180, and a first avoiding structure 191 is disposed on one side of the upper plastic component 190 close to the sealing ring 180, while a second avoiding structure 1511 is disposed on one side of the external insulation part 151 close to the sealing ring 180. The first avoiding structure 191 and the second avoiding structure 1511 are configured to accommodate the compressed and deformed sealing ring 180, so it is possible to further improve the sealing performance. The first avoiding structure 191 and the second avoiding structure 1511 are both disposed as recesses formed toward the direction facing away from the sealing ring 180. Preferably, in this embodiment, the first avoiding structure 191 is a groove formed by chamfering on one side of the upper plastic component 190 close to the end wall 111, and the second avoiding structure 1511 is a groove formed by chamfering on one side of the external insulation part 151 close to the terminal 140. In this embodiment, the configuration enables the sealing ring 180, after compression deformation, to form an overlapping structure with the external insulation part 151 and the upper plastic component 190, creating a sequential tightened compression. Along the radius direction of the end wall 111, the contact areas between the sealing ring 180 and the outer flange 143 as well as between the sealing ring 180 and the end wall 111 are increased, all of which further improve the sealing effect.

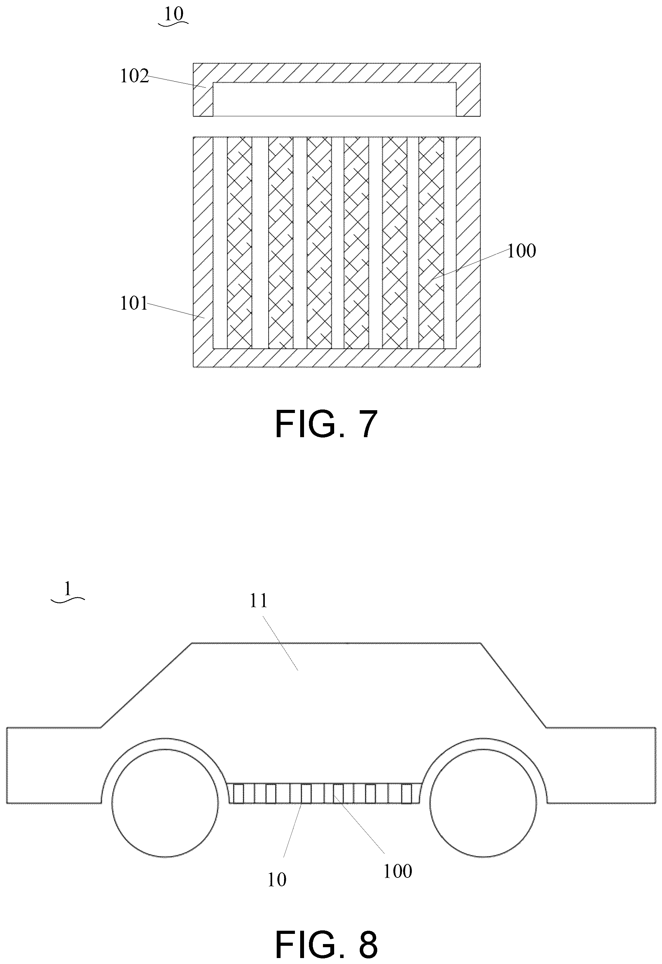

Please refer to FIG. 7, the present disclosure also provides a battery assembly 10. The battery assembly 10 includes the secondary battery 100 described in any one of the above-mentioned embodiments. In an embodiment of the battery assembly 10 in the present disclosure, the battery assembly 10 includes a casing 101, a casing cover 102, and multiple secondary batteries 100. The multiple secondary batteries 100 are placed in the casing 101, connected in series or parallel with each other, or in a combination of series and parallel connection. The casing cover 102 covers the casing 101 to protect the multiple secondary batteries 100. It should be noted that in addition to the secondary battery 100 in the present disclosure, the battery assembly 10 may also include parts such as a thermal management system, circuit board, etc. The battery assembly 10 may be a battery module or a battery pack, an energy storage cabinet, and so on; these will not be elaborated one by one here.

Please refer to FIG.8, the present disclosure also provides an electronic device 1. The electronic device 1 includes the above-mentioned battery assembly 10. The work part 11 is electrically connected with the battery assembly 10 to obtain power support. As an example, the electronic device 1 is a vehicle, which may be a gasoline vehicle, gas vehicle, or new energy vehicle. The new energy vehicle may be a pure electric vehicle, hybrid vehicle, or extended-range vehicle, and so on, but is not limited thereto. The work part 11 is the vehicle body, the battery assembly 10 is disposed at the bottom of the vehicle body, and provides power support for operation of the vehicle or the operation of electrical components inside the vehicle. However, in some other embodiments, the electronic device 1 may also be a mobile phone, portable device, laptop computer, ship, spacecraft, electric toy, and electric tool, etc. Spacecraft includes aircraft, rockets, space shuttles, and spaceships, etc.; the work part 11 may be a unit component that can obtain power from the battery assembly 10 and perform corresponding work, such as the fan blade rotation unit of a fan, the dust suction working unit of a vacuum cleaner, etc. Electric toys include fixed or mobile electric toys, for example, game consoles, electric car toys, electric ship toys, and electric aircraft toys, etc.; electric tools include metal cutting electric tools, grinding electric tools, assembly electric tools, and railway electric tools, for example, electric drills, electric grinders, electric wrenches, electric screwdrivers, electric hammers, impact drills, concrete vibrators, and electric planers, etc. The embodiments of the present disclosure do not impose special restrictions on the above electronic device 1.

In the present disclosure, the secondary battery has an integrally formed insulation sealing member, which completely surrounds the terminal hole, thus improving the reliability of insulation between the terminal and the end wall. Along the thickness direction of the end wall, the projections of the internal insulation part and the lower plastic component on the end wall at least partially overlap each other, that is, the lower plastic component and the internal insulation part at least partially overlap each other, so that there is no gap between the lower plastic component and the internal insulation part. In this way, it is possible to mitigate the technical problem of short circuit risk between the end wall and the current collector structure. Therefore, the present disclosure effectively overcomes some practical problems in the existing technology, thus having high utilization value and practical significance. The above embodiments only illustratively explain the principles and effects of this present disclosure, and are not used to limit the present disclosure. Any person skilled in this technology may modify or change the above embodiments without departing from the spirit and scope of the present disclosure. Therefore, all equivalent modifications or changes completed by those with ordinary knowledge in the relevant technical field without departing from the spirit and technical concept disclosed by the present disclosure should still be covered by the claims of the present disclosure.

## Claims

1. A secondary battery (100), comprising
a housing (110), comprising an end wall (111) and a side wall (112) surrounding the end wall (111), wherein the end wall (111) is provided with a terminal hole (1111);
an electrode assembly (120), disposed within the housing (110);
a terminal (140), fixed on the end wall (111) and electrically connected with the electrode assembly (120), wherein the terminal (140) comprises a columnar part (142), an outer flange (143) and an inner flange (141), the columnar part (142) passes through the terminal hole (1111), the outer flange (143) is located outside the housing (110), and extends from the columnar part (142) toward an outer periphery of the end wall (111), the inner flange (141) is located inside the housing (110), and extends from the columnar part (142) toward the outer periphery of the end wall (111);
an insulation sealing member (150), comprising an integrally formed external insulation part (151), a hole insulation part (152) and an internal insulation part (153), wherein the external insulation part (151) is located between the outer flange (143) and the end wall (111), the hole insulation part (152) is located between the columnar part (142) and the terminal hole (1111), the internal insulation part (153) is located between the inner flange (141) and the end wall (111);
a lower plastic component (160), located on one side of the end wall (111) facing the electrode assembly (120), wherein the lower plastic component (160) surrounds the columnar part (142);
wherein along a thickness direction of the end wall (111), projections of the internal insulation part (153) and the lower plastic component (160) on the end wall (111) at least partially overlap each other, and the lower plastic component (160) isolates the electrode assembly (120) from the end wall (111).

2. The secondary battery (100) according to claim 1, wherein along the thickness direction of the end wall (111), the internal insulation part (153) and the lower plastic component (160) overlap each other to form an overlap part (170), the internal insulation part (153) and/or the lower plastic component (160) comprise a thinning structure (171) for reducing a thickness of the overlap part (170).

3. The secondary battery (100) according to claim 2, wherein the thinning structure (171) comprises a first step (154) disposed at an outer periphery of one side of the internal insulation part (153) facing the end wall (111), the first step (154) is recessed toward a direction facing away from the end wall (111), the thinning structure (171) further comprises a second step (161) disposed at an inner periphery of one side of the lower plastic component (160) facing the electrode assembly (120), the second step (161) is recessed toward a direction facing the end wall (111).

4. The secondary battery (100) according to claim 3, wherein the first step (154) and the second step (161) overlap each other, along a radius direction of the end wall (111), there is a gap between an inner edge of the first step (154) and an outer edge of the second step (161).

5. The secondary battery (100) according to claim 4, wherein along the radius direction of the end wall (111), a distance of the gap between the inner edge of the first step (154) and the outer edge of the second step (161) is a, wherein 0.2mm≤a≤2mm.

6. The secondary battery (100) according to claim 1, wherein one end of the inner flange (141) holding the internal insulation part (153) comprises a fastener structure (144) extending toward the end wall (111), and one side of the internal insulation part (153) facing the inner flange (141) is provided with an accommodating groove (155) that cooperates with the fastener structure (144).

7. The secondary battery (100) according to claim 1, wherein a sealing ring (180) is further disposed between the outer flange (143) and the end wall (111), and the sealing ring (180) surrounds the external insulation part (151).

8. The secondary battery (100) according to claim 7, wherein an upper plastic component (190) is further disposed between the outer flange (143) and the end wall (111), the upper plastic component (190) surrounds the sealing ring (180), a first avoiding structure (191) is disposed on one side of the upper plastic component (190) close to the sealing ring (180), and a second avoiding structure (1511) is disposed on one side of the external insulation part (151) close to the sealing ring (180).

9. A battery assembly (10), comprising the secondary battery (100) according to any one of claims 1 to claim 8.

10. An electronic device (1), comprising the battery assembly (10) according to claim 9.
